## Europäisches Patentamt
## European Patent Office
## Office européen des brevets

(11) Veröffentlichungsnummer: **0 015 026**
**B1**

# EUROPÄISCHE PATENTSCHRIFT

(45) Veröffentlichungstag der Patentschrift:
**25.05.83**

(51) Int. Cl.³: **H 01 K 1/34,** H 01 K 1/26

(21) Anmeldenummer: **80200111.5**

(22) Anmeldetag: **11.02.80**

(54) **Glühfadenlampe.**

(30) Priorität: **19.02.79 CH 1590/79**
**12.05.79 DE 2919204**

(43) Veröffentlichungstag der Anmeldung:
**03.09.80 Patentblatt 80/18**

(45) Bekanntmachung des Hinweises auf die Patenterteilung:
**25.05.83 Patentblatt 83/21**

(84) Benannte Vertragsstaaten:
**AT BE CH DE FR GB IT LU NL SE**

(56) Entgegenhaltungen:
**FR-A-781 131**
**US-A-2 592 102**

(73) Patentinhaber: **Sovilla, Heinz, 2, Terrailles,**
**CH-1304 Cossonay (CH)**

(72) Erfinder: **Sovilla, Heinz, 2, Terrailles, CH-1304 Cossonay**
**(CH)**

(74) Vertreter: **Jörchel, Dietrich R.A., c/o BUGNION S.A.**
**Conseils en Propriété Industrielle 10, route de Florissant**
**Case postale 375, CH-1211 Genève 12 Champel (CH)**

## Glühfadenlampe

Die Erfindung bezieht sich auf Glühfadenlampen mit einem inneren, die Glühfadenanordnung umgebenden Quarzglaskolben und mit einem diesen inneren Quarzglaskolben unter Bildung eines Zwischenraumes im Abstand umschließenden äußeren Glaskolben.

Eine Glühfadenlampe mit doppeltem Glaskolben ist in der DE-OS 2 555 480 als wärmegedämmte Glühbirne beschrieben, bei der der innere Glaskolben mit Edelgas gefüllt und der Zwischenraum zwischen den beiden Glaskolben mit verdünnter Luft gefüllt oder vollständig evakuiert sein soll, so daß in dem Zwischenraum nur ein geringer oder überhaupt kein Wärmeverlust durch Konvektion stattfindet. Bei diesen bekannten Glühbirnen muß die Temperatur im inneren Glaskolben insgesamt relativ niedrig gehalten werden, da der dünnwandige Glaskolben einer stark erhöhten Temperatur nicht standhalten kann, insbesondere wegen der mit der Temperaturerhöhung verbundenen Ausdehnung des Edelgases.

Bei einer durch die FR-PS 781 131 bekannten Glühlampe mit ebenfalls zwei ineinandergeschachtelten Glaskolben ist die Innenseite des inneren Glaskolbens mit einer reflektierenden metallischen Beschichtung versehen, welche Wärmestrahlung reflektiert, für sichtbares Licht jedoch durchlässig ist. Dabei kann der innere Glaskolben entweder geschlossen oder mit diametral gegenüberliegenden Öffnungen versehen sein, durch welche die Halterungsdrähte und die elektrischen Leitungen für die Glühfadenanordnung hindurchgehen.

Ausgehend vom vorstehend erläuterten Stand der Technik liegt der Erfindung die Aufgabe zugrunde, bei einer Glühfadenlampe mit wenigstens zwei ineinandergeschachtelten Glaskolben eine optimale Lichtausbeute dadurch zu erreichen, daß die Konvektions- und Strahlungsverluste auf ein Minimum reduziert werden, und insbesondere als Halogenlampen ausgebildete Glühfadenlampen zu schaffen, welche wesentlich preiswerter herstellbar sind als bisher.

Diese Aufgabe wird erfindungsgemäß durch die im Patentanspruch 1 und im Patentanspruch 12 angegebenen Merkmale gelöst.

Der entscheidende Vorteil der Glühfadenlampe nach der Erfindung besteht darin, daß Energieverluste durch Wärmestrahlung und Wärmekonvektion weitgehend vermieden werden, weil der dickwandige innere Glaskörper einem erhöhten Innendruck widerstehen und einen großen Teil der Wärmestrahlung absorbieren und zurückspiegeln kann, so daß sich im Innenraum des inneren Glaskolbens eine sehr hohe Temperatur aufrechterhalten läßt, die zu einer optimalen Lichtausbeute führt. Die Dicke des inneren Glaskolbens und sein möglichst nur geringer Abstand von der Glühfadenanordnung werden so gewählt, daß bei der an seiner Innenfläche herrschenden, erhöhten Glastemperatur, die insbesondere über etwa 800°C, vorzugsweise noch wesentlich höher liegen kann, sowie unter den herrschenden Druckbedingungen seine mechanische Widerstandsfähigkeit erhalten bleibt und praktisch noch kein Glaskolbenmaterial verdampft bzw. daß sich im Innenraum oder an der Glaskolben-Innenfläche eine möglichst optimale Betriebstemperatur einstellt. Die Wandstärke des inneren Glaskolbens liegt minimal bei etwa 1 mm, kann jedoch im allgemeinen mehrere Millimeter, z. B. 3 bis 6 mm, betragen.

Vorzugsweise ist die Glühfadenlampe nach der Erfindung als Halogenlampe ausgebildet.

Der Wirkungsgrad läßt sich noch durch eines oder mehrere der in den abhängigen Patentansprüchen angegebenen Merkmale verbessern, insbesondere aufgrund eines oder mehrerer der folgenden Merkmale:

a) Aufbau des inneren Glaskolbens aus Quarzglasfasern;

b) Füllung eines Zwischenraums mit einem Wärmestrahlung absorbierenden Gas und/ oder Zusatz von Wärmestrahlung reflektierenden Partikeln zum Material eines Glaskolbens, insbesondere des inneren Glaskolbens; vorzugsweise kann der innere Glaskolben aus Quarz-Schaumglas mit Kohlendioxid-Einschlüssen bestehen;

c) Vergrößerung der Innenwandfläche des inneren Glaskolbens durch Rieffelung oder Faltenbildung;

d) Verwendung einer speziellen Glühfadenanordnung, wobei sich Anordnungen mit mindestens einem dicken Wolframfaden oder dergleichen, welcher außen von einer dünneren Wendel umschlungen wird, besonders bewährt haben.

Eine Ausgestaltung nach Patentanspruch 2 erlaubt es, die Temperatur und damit den Druck im Innenraum des inneren Glaskolbens noch weiter zu erhöhen; ein eng begrenzter Verbindungskanal ermöglicht nämlich einen Druckausgleich, ohne daß die Temperatur im Zwischenraum auf die Temperatur des Innenraums ansteigt. Eine solche Ausbildung ermöglicht es vor allem, Halogenglühlampen wesentlich preiswerter als bisher und mit einem zum Beispiel kugelförmigen inneren Quarzglaskolben so herzustellen, daß die insbesondere für Autoscheinwerfer usw. erforderliche Optik der Lichtabstrahlung bzw. Ausbreitung wie bei üblichen Glühbirnen erreicht wird.

Die Erfindung wird anhand der Zeichnungen an zwei Ausführungsbeispielen näher erläutert. Es zeigt

Fig. 1 einen schematischen Längsschnitt durch eine erste Ausführungsform und

Fig. 2 einen Längsschnitt durch eine zweite Ausführungsform.

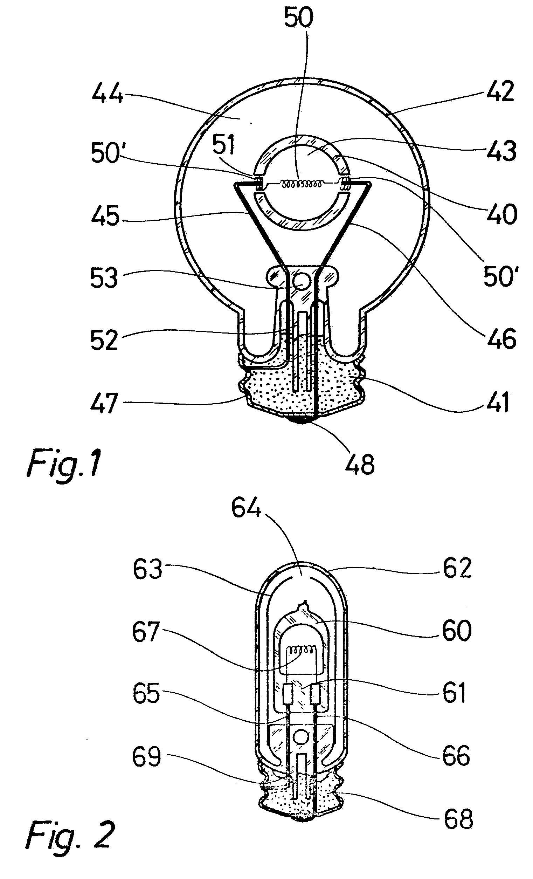

Fig. 1 zeigt ein Ausführungsbeispiel einer Halogenglühlampe nach der Erfindung mit einem äußeren Glaskolben 42 aus Normalglas, der wie bei einer gewöhnlichen Glühbirne am Lampensockel 41 befestigt ist, und mit einem inneren dickerwandigen Quarzglaskolben 40 in Form einer kugelförmigen Kapsel, welche die an den elektrischen Zuleitungen 45 und 46 angebrachte Glühfadenanordnung 50 eng umschließt und den Innenraum 43 begrenzt.

Da Quarzglas ein schlechter Wärmeleiter ist, bildet der dickwandige innere Quarzglaskolben 40 eine gute Wärmeisolation und verringert dadurch die Wärmeableitung von der Glühfadenanordnung 50, deren Lichtausbeute um so besser ist, je höher die Glühfadentemperatur ist. Da ferner der innere Glaskolben 40 die Glühfadenanordnung 50 eng umschließt, wird er während des Betriebs sehr heiß, was vorteilhaft ist, da nämlich die vom inneren Glaskolben in Richtung auf die Glühfadenanordnung rückgestrahlte Wärme um so größer ist, je höher dessen Temperatur ist, so daß der Glühfaden zusätzlich entsprechend stärker erwärmt wird und eine höhere Lichtausbeute liefert.

Der innere Glaskolben 40 hat zentriert diametral gegenüberliegende kleine Öffnungen 51. Eine solche, mit Öffnungen versehene kleine Quarzglaskugel, die je nach Lampengröße und Leistung eine Wandstärke von etwa 1 bis 3 mm und einen Durchmesser von zum Beispiel 8 bis 25 mm haben kann, ist als vorgefertigtes Bauelement preiswert herstellbar und erlaubt es, Halogenglühlampen der in Fig. 1 gezeigten Art mit konventionellen Fabrikationsautomaten für Glühbirnen bei den für Normal- bzw. Bleiglas üblichen Temperaturen wesentlich billiger herzustellen als bekannte Halogenglühlampen, die eine Bearbeitung und Formung des hochschmelzenden Quarzglases erfordern.

Bei der Herstellung einer solchen Lampe nach der Erfindung wird einfach die vorbereitete Glühfadenanordnung 50 in Form einer Glühwendel durch eine der Öffnungen 51 des inneren Glaskolbens 40 derart eingeschoben, daß sie mit beiden Enden in den Öffnungen 51 zentriert gehalten wird; dazu sind die Endabschnitte der Glühwendel als Wendelabschnitte 50' ausgebildet, deren Durchmesser dem der Öffnungen 51 angepaßt ist und welche anschließend an ihren äußeren Enden mit den Zuleitungen 45 und 46 verschweißt werden, die wie üblich mit dem Schraubkontakt 47 bzw. dem Mittelkontakt 48 in Verbindung stehen. Das Auspumpen und die Einfüllung des Halogengasgemisches erfolgt durch den zunächst offenen Pumpstengel bzw. Saugstutzen 52 und die Öffnung 53 des inneren Glassockels, wobei der Innenraum 43 und der Zwischenraum 44 zwischen innerem und äußerem Glaskolben wegen der beide Räume verbindenden Öffnungen 51 gleichzeitig evakuiert bzw. mit Gas gefüllt werden.

Die innere Quarzglaskapsel, die anstelle einer Kugelform auch eine andere einfache geometrische Gestalt, zum Beispiel Röhrchenform, haben kann, sorgt für die beim Halogenzyklus notwendige Minimaltemperatur von wenigstens etwa 250°C auf ihrer Innenfläche und hat außer der Verbilligung der Herstellung den weiteren Vorteil, daß aufgrund der einfachen, symmetrischen Kapselform sehr günstige optische Verhältnisse für eine definierte, optimale Lichtabstrahlung erreicht werden, wie sie insbesondere bei Autoscheinwerfern wesentlich ist; ferner findet eine wesentlich bessere Reflexion der Wärmestrahlen auf die zentrale Glühfadenanordnung als bisher statt. Demgegenüber verhindert die Gestalt des Quarzglaskolbens konventioneller Halogenglühlampen infolge ihrer Unregelmäßigkeit sowohl eine definierte Lichtabstrahlung als auch eine wirkungsvolle Reflexion der Wärmestrahlen.

Die bei der Fertigung der inneren Quarzglaskapseln vorgesehenen zentrierten Öffnungen 51, die für die beschriebene verbilligte Halogenlampenherstellung wesentlich sind, können gegebenenfalls während des Betriebs der Lampe allmählich zuschmelzen, ohne daß das nachteilige Folgen für die Funktion der Lampe hätte.

Die Erfindung erlaubt es also erstmals, in einer üblichen, preiswert herzustellenden Glühlampe durch Zufügen einer einfachen inneren, preiswert vorzufertigenden Quarzglaskapsel, welche die Aufheizung auf die für den Halogenzyklus erforderliche Minimaltemperatur ermöglicht, auf billige Weise die Bedingungen für den Betrieb einer Halogenglühlampe zu schaffen, die bekanntlich eine wesentlich höhere Lichtausbeute hat, bisher jedoch viel teurer als eine normale Glühlampe ist. Dagegen ist die Herstellung einer Halogenglühlampe nach Fig. 1 praktisch nicht viel teurer als die einer normalen Glühbirne; die Erfindung ermöglicht daher den allgemeinen Einsatz der lichtstarken Halogenglühlampen, die bisher aus Kostengründen nur für Sonderzwecke Verwendung fanden, auf zahlreichen anderen Gebieten, insbesondere im Haushalt, wobei sich Lampen mit praktisch beliebiger Leistung, zum Beispiel mit 10 W, 20 W, 60 W, 100 W, 200 W usw., herstellen lassen.

Fig. 2 zeigt das Beispiel einer anderen Halogenglühlampe mit drei ineinandergeschachtelten Glaskolben, und zwar einem inneren, hermetisch verschlossenen Quarzglaskolben 60, der eine Wandstärke von etwa 1,2 bis 1,5 mm hat, mit einem mittleren, dünnwandigen Glaskolben 63, der eine Öffnung 64 in seinem oberen Bereich und eine Wandstärke von etwa 0,5 mm hat, und mit einem auf dem Lampensockel 68 befestigten äußeren Glaskolben 62, der eine Wandstärke von etwa 0,5 bis 0,7 mm hat. Der innere dickwandige Quarzglaskolben 60, der einem erhöhten Innendruck widersteht und dessen minimaler Abstand von der in seinem Inneren angeordneten Glühfadenanordnung 67 etwa 1 bis 2 mm beträgt, bildet mit seiner Halogengasmischung und der Glühfadenanordnung 67, deren Zuleitungen durch seinen inneren Glassockel 61 verlaufen, im wesentlichen den Kern einer üblichen Halogenglühlampe, die jedoch erfindungsgemäß zur Steigerung der Wärmeisolation von zwei hochevakuierten Glaskolben 63 und 62 umgeben ist. Die Abstände des mittleren Glaskolbens 63 vom inneren Quarzglaskolben 60 einerseits und vom äußeren Glaskolben 62 andererseits betragen im Umfangsbereich der Lampe jeweils etwa 0,8 bis 1,2 mm. Der innere Quarzglaskolben 60 wird durch die entsprechend starren Zuleitungen 65 und 66 im Abstand oberhalb des Lampensockels 68 getragen, durch welchen in üblicher Weise die elektrischen Verbindungen zum Schraubkontakt und zum Mittelkontakt verlaufen. Über den zunächst offenen, später zugeschweißten Saugstutzen 69 wird bei der Lampenfertigung das Hochvakuum in beiden Glaskolben 63 und 62 in einem Arbeitsgang erzeugt, da beide Zwischenräume durch die Öffnung 64 verbunden sind.

Eine Halogenglühlampe nach Fig. 2 für 20 W und 12 V ergab eine Lichtausbeute, also einen Lichtstrom in Lumen je Watt elektrischer Leistung, welche um mindestens 30 bis 50% höher als bei einer vergleichbaren konventionellen Halogenglühlampe mit nur einem einzigen Quarzglaskolben lag und gegenüber einer vergleichbaren normalen Glühlampe um einen Faktor 2 bis 3 höher war. Während des Betriebs wurde bei einer Lampe nach Fig. 2 an der Außenseite des inneren Quarzglaskolbens 60 eine Temperatur von 161°C, am mittleren Glaskolben 63 eine Temperatur von 117°C und am äußeren Glaskolben 62 eine Temperatur von nur 74°C gemessen. Hierbei war das Vakuum noch nicht optimal, so daß sich bei einem gesteigerten Vakuum noch bessere Werte erzielen lassen.

Allgemein zeigte sich, daß die Lichtausbeute bei einer Lampe nach der Erfindung um wenigstens 150% höher liegt als bei vergleichbaren konventionellen Lampen; so entsprach zum Beispiel die Lichtausbeute einer erfindungsgemäßen Lampe mit 10 W oder 60 W ungefähr der einer üblichen 25-W- bzw. 150-W-Lampe. Gleichzeitig lag die Temperatur des äußeren Glaskolbens um mehr als 50% tiefer und betrug zum Beispiel bei einer 10-W-Lampe nur etwa 50°C gegenüber etwa 120°C bei einer üblichen 25-W-Lampe.

In den Beispielen nach den Fig. 1 und 2 kann der innere Glaskolben natürlich auch in an sich bekannter Weise auf einem inneren Glasgestell bzw. auf wenigstens einem Halterungsstift befestigt sein. Der möglichst gering zu wählende Abstand des inneren Glaskolben von der Glühfadenanordnung kann allgemein zwischen etwa 1 mm (bei kleinen Halogenglühlampen) und z. B. 10 mm liegen und hängt jeweils von der Lampenleistung, vom Material, von der Struktur und der Wandstärke des inneren Glaskolbens, von der Gasfüllung und der zulässigen bzw. erwünschten Erhitzung ab. Die Wandstärke des inneren Glaskolbens sollte bei mindestens etwa 1 mm liegen und kann bis zu 6 mm und mehr betragen.

Im Beispiel nach Fig. 2 kann der Zwischenraum zwischen dem inneren Glaskolben 60 und dem äußeren Glaskolben 62 auch mit einem Infrarotbzw. Wärmestrahlung absorbierendem Gas wie Kohlendioxid, Wasserdampf oder einem Gemisch davon gefüllt sein. Ferner kann im Beispiel nach Fig. 2 der mittlere Glaskolben 63 auch geschlossen und einer der Zwischenräume zwischen diesem und dem inneren Glaskolben 60 bzw. dem äußeren Glaskolben 62 evakuiert und der andere Zwischenraum mit einem Infrarotstrahlung absorbierendem Gas gefüllt sein.

Prinzipiell können auch mehr als drei schalenförmig ineinandergeschachtelte Glaskolben vorgesehen sein, wobei wenigstens einer der Glaskolben mindestens eines der früher angegebenen Zusatzmerkmale aufweisen kann und ein Zwischenraum oder beliebige Zwischenräume evakuiert oder mit einem Infrarotstrahlung absorbierendem Gas gefüllt sein können. Es ist natürlich leidiglich dafür zu sorgen, daß Kohlendioxid bzw. Wasserdampf nicht in das Innere des inneren Glaskolbens gelangen kann, also beispielsweise kein derartiges Gas in dem Zwischenraum vorhanden sein darf, welcher dem inneren Glaskolben unmittelbar benachbart ist, wenn dieser Verbindungsöffnungen aufweist.

Einer der Glaskolben, vorzugsweise der innere Glaskolben, kann auch aus Schaumglas bestehen, und zwar entweder aus grob geschäumtem Glas oder aus mikroskopisch fein geschäumtem sog. Opalglas; die Schaumglaswand des Glaskolbens enthält dann vorzugsweise Einschlüsse eines Wärmestrahlung absorbierenden Gases, zum Beispiel Kohlendioxid. Allgemein kann das Material wenigstens eines der Glaskolben auch mit Infrarotstrahlung reflektierenden und/oder absorbierenden Stoffen bzw. Partikeln versetzt sein.

Die Wandung des inneren Glaskolbens kann ferner auf ihrer Außenseite mit einer Beschichtung versehen sein, welche nach Art einer Vergütung aufgebracht werden kann und ein oder mehrere Filterschichten bildet, die für Wärme- bzw. Infrarotstrahlung undurchlässig, für sichtbares Licht jedoch durchlässig sind. Auch kann die Innenwand des inneren Glaskolbens derart unregelmäßig bzw. geriffelt oder gefaltet ausgebildet sein, daß sich eine vergrößerte Innenwandfläche ergibt, die bereits als reine Grenzfläche ein erhöhtes Reflexionsvermögen aufweist und die zur Erhöhung der Lichtausbeute ebenfalls mit einer für Wärmestrahlung reflektierenden Filterschicht versehen sein kann.

Das Material des inneren Glaskolbens kann mit einer Armierung versehen sein, die vorzugsweise aus Wolframfäden besteht, gegebenenfalls aber auch aus einem geeigneten Keramikmaterial oder dergleichen bestehen könnte, an dem das Glas auch dann noch haftet, wenn es bereits mehr oder weniger teigig geworden ist, wobei die Kapillarität der Armierung von Bedeutung ist.

Bei einer weiteren Ausführungsform der Erfindung kann die Glühfadenlampe wenigstens einen inneren dicken Wolframfaden aufweisen (ähnlich wie bei Niederspannungslampen für beispielsweise 6 V), der von einem äußeren feineren Wolframfaden (ähnlich wie bei Lampen für die normale Netzspannung von 110 bzw. 220 V) umgeben ist. Wenn ein dünnerer längerer Wolframfaden ein oder mehrere dickere und kürzere Wolframfäden umgibt, dann werden diese bei gleichem Speisestrom auf eine viel höhere Temperatur erhitzt.

Durch die Verwendung von zwei, drei oder noch mehr ineinandergeschachtelten Glaskolben wird nicht nur die Wärmeisolation der Lampe erhöht, sondern es lassen sich auch, je nach der umgesetzten Energiemenge, Druck- und Temperaturunterschiede beiderseits jedes der Glaskolben verringern, so daß vorteilhafte Abstufungen dieser Eigenschaften erzielt werden. Außerdem lassen sich die einzelnen, durch die verschiedenen Glaskolben begrenzten Zwischenräume in beliebiger Weise mit Gas füllen oder evakuieren, so daß der innere Glaskolben zum Beispiel von einem ersten gasgefüllten und einem zweiten evakuierten Raum oder umgekehrt, und gegebenenfalls noch von weiteren Räumen umgeben sein kann.

**Patentansprüche**

1. Glühfadenlampe mit einem inneren, die Glühfadenanordnung (67) umgebenden Quarzglaskolben (60) und mit einem diesen inneren Quarzglaskolben (60) unter Bildung eines Zwischenraumes im Abstand umschließenden äußeren Glaskolben (62), dadurch gekennzeichnet, daß wenigstens noch ein weiterer, den inneren Quarzglaskolben (60) mit Abstand umschließender und im Abstand vom äußeren Glaskolben (62) angeordneter mittlerer Glaskolben (63) vorgesehen ist und daß der innere Quarzglaskolben (60) hermetisch verschlossen und zur Verringerung der Wärmeableitung vom Glühfaden wesentlich dickerwandig als die anderen Glaskolben (62, 63) ist und in an sich bekannter Weise die Glühfadenanordnung (67) eng umschließt.

2. Glühfadenlampe nach Anspruch 1, dadurch gekennzeichnet, daß der mittlere Glaskolben (63) wenigstens eine dem Druckausgleich in den an ihn grenzenden Räumen dienende, enge Verbindungsöffnung (64) aufweist.

3. Glühfadenlampe nach Anspruch 1 oder 2, dadurch gekennzeichnet, daß in wenigstens einem der von einem Glaskolben umschlossenen Zwischenräume außerhalb des vom inneren Quarzglaskolben (60) begrenzten Innenraums ein Hochvakuum besteht.

4. Glühfadenlampe nach einem der Ansprüche 1 bis 3, dadurch gekennzeichnet, daß wenigstens einer der durch einen Glaskolben umschlossenen Zwischenräume außerhalb des vom inneren Quarzglaskolben (60) begrenzten Innenraums mit einem Wärmestrahlung absorbierenden Gas, wie Kohlendioxid, Wasserdampf oder einem Gemisch davon, gefüllt ist.

5. Glühfadenlampe nach einem der Ansprüche 1 bis 4, dadurch gekennzeichnet, daß der innere Quarzglaskolben (60) als Halogenlampe ausgebildet ist und vorzugsweise von den elektrischen Zuleitungen (65, 66) für die Glühfadenanordnung (67) getragen wird.

6. Glühfadenlampe nach einem der Ansprüche 1 bis 5, dadurch gekennzeichnet, daß die Glühfadenanordnung mindestens einen inneren dicken Glühfaden und mindestens einen diesen umschlingenden dünneren äußeren Glühfaden aufweist.

7. Glühfadenlampe nach einem der Ansprüche 1 bis 6, dadurch gekennzeichnet, daß die Wandung wenigstens eines der Glaskolben, vorzugsweise des inneren Quarzglaskolbens (60), aus Glasfasern aufgebaut ist.

8. Glühfadenlampe nach einem der Ansprüche 1 bis 7, dadurch gekennzeichnet, daß die Wandung wenigstens eines der Glaskolben, vorzugsweise des inneren Quarzglaskolbens (60), aus Schaumglas, und zwar aus grob geschäumtem Glas oder aus mikroskopisch fein geschäumtem Opalglas, besteht und vorzugsweise in ihrer Masse Infrarotstrahlung absorbierende Stoffe wie Kohlendioxid enthält.

9. Glühfadenlampe nach einem der Ansprüche 1 bis 8, dadurch gekennzeichnet, daß das Material der Wandung wenigstens eines der Glaskolben, vorzugsweise des inneren Quarzglaskolbens (60), mit Infrarotstrahlung reflektierenden oder absorbierenden Partikeln versehen ist.

10. Glühfadenlampe nach einem der Ansprüche 1 bis 9, dadurch gekennzeichnet, daß die Innenseite der Wandung des inneren Glasquarzkolbens so ausgebildet ist, daß sich eine vergrößerte Innenwandfläche, beispielsweise durch Riffelung oder Faltenbildung, ergibt.

11. Glühfadenlampe nach einem der Ansprüche 1 bis 10, dadurch gekennzeichnet, daß sie als Halogenlampe ausgebildet ist.

12. Glühfadenlampe mit einem inneren, die Glühfadenanordnung (50) umgebenden Quarzglaskolben (40), der diametral gegenüberliegende Öffnungen (51) aufweist, und mit einem diesen inneren Quarzglaskolben (40) unter Bildung eines Zwischenraums im Abstand umschließenden äußeren Glaskolben (42), dadurch gekennzeichnet, daß die Glühfadenlampe als Halogenlampe ausgebildet ist, daß der innere Quarzglaskolben (40) zur Verringerung der Wärmeableitung vom Glühfaden dickerwandig als der äußere, aus Normalglas bestehende Glaskolben (42) ist und lediglich von einer Halterung oder von den elektrischen Zuleitungen (45, 46) für die Glühfadenanordnung (50) getragen wird und daß die diametral gegenüberliegenden Öffnungen (51) im inneren Quarzglaskolben (40) nur so groß bemessen sind, daß die durch eine der Öffnungen (51) eingeschobene Glühfadenanordnung (50) mit ihren beiden Enden (50') in beiden Öffnungen (51) zentriert gehalten wird.

13. Glühfadenlampe nach Anspruch 12, dadurch gekennzeichnet, daß der innere Quarzglaskolben (40) röhren- oder kugelförmig ist.

## Claims

1. Incandescent lamp comprising an inner quartz glass bulb (60) surrounding the filament arrangement (67) and an outer glass bulb (62) spaced from and surrounding said inner quartz glass bulb (60) and defining an intermediate space, characterized in that at least one further intermediate glass bulb (63) spaced from and surrounding the inner quartz glass bulb (60) and spaced from the outer glass bulb (62) is provided, and that said inner quartz glass bulb (60) is hermetically sealed and has a substantial thicker wall than the other glass bulbs (62, 63) for reducing the heat dissipation from the filament, said inner quartz glass bulb closely surrounds said filament arrangement (67) in a manner known per se.

2. Incandescent lamp according to claim 1, characterized in that said intermediate glass bulb (63) has at least one small connecting passage (64) to provide equalization of pressure in the spaces adjacent to it.

3. Incandescent lamp according claim 1 or 2, characterized in that a high vacuum prevails in at least one of the intermediate spaces surrounded by a glass bulb outside the inner space limited by the inner quartz glass bulb (60).

4. Incandescent lamp according to any of claims 1 to 3, characterized in that at least one of the intermediate spaces surrounded by a glass bulb outside the inner space limited by the inner quartz glass bulb (60) is filled with a gas capable of absorbing heat radiation, as carbon dioxide, water vapor or a mixture thereof.

5. Incandescent lamp according to any of claims 1 to 4, characterized in that the inner quartz glass bulb (60) is formed as a halogen lamp and is preferably supported by the lead-in wires (65, 66) for the filament arrangement (67).

6. Incandescent lamp according to any of claims 1 to 5, characterized in that the filament arrangement comprises at least one inner thick filament and at least one outer thinner filament surrounding said inner thick filament.

7. Incandescent lamp according to any of claims 1 to 6, characterized in that the wall of at least one glass bulb, preferably of the inner quartz glass bulb (60), ist composed of glass fibers.

8. Incandescent lamp according to any of claims 1 to 7, characterized in that the wall of at least one glass bulb, preferably of the inner quartz glass bulb (60), is made of foam glass, either coarsely foamed glass or microscopically fine foamed opal glass, and preferably contains in its mass inclusions of infrared radiation absorbing substances as carbon dioxide gas.

9. Incandescent lamp according to any of claims 1 to 8, characterized in that the material of the wall of at least one of the glass bulbs, preferably of the inner quartz glass bulb (60), contains particles capable of reflecting or absorbing the infrared radiation.

10. Incandescent lamp according to any of claims 1 to 9, characterized in that the inner face of the wall of the inner quartz glass bulb is so constituted that its inner surface area is increased, p. e. by corrugation or winkling.

11. Incandescent lamp according to any of claims 1 to 10, characterized in that it is formed as a halogen lamp.

12. Incandescent lamp comprising an inner quartz glass bulb (40) surrounding the filament arrangement (50) and provided with diametral opposite openings (51), and one outer glass bulb (42) spaced from and surrounding the inner quartz glass bulb (40) and defining an intermediate space, characterized in that the incandescent lamp is formed as a halogen lamp, that for reducing the heat dissipation from the filament the inner quartz glass bulb (40) has a thicker wall than the outer glass bulb (42) being made of normal glass, and is carried only by mounting means or by the lead-in wires (45, 46) for the filament arrangement (50), and that the diametral opposite openings (51) in the inner quartz glass bulb (40) are dimensioned such that the filament arrangement (50) introduced through one of said openings (51) being with their two end sections (50') supported and centered in said openings (51).

13. Incandescent lamp according to claim 12, characterized in that the inner quartz glass bulb (40) is spherical or tubular.

## Revendications

1. Lampe à incandescence comprenant un bulbe intérieur en verre de quartz (60) entourant le filament (67) et un bulbe extérieur (62) en verre entourant le bulbe intérieur (60) à une cetaine distance en formant un espace entre les deux bulbes, caractérisée en ce qu'il est prévu au moins un autre bulbe, intermédiaire (63) en verre, entourant le bulbe intérieur en verre de quartz (60) à une certaine distance de celui-ci et à une certaine distance du bulbe extérieur (62) et en ce que le bulbe intérieur en verre de quartz (60) est fermé hermétiquement et qu'il est substantiellement plus épais que les autres bulbes (62, 63) afin de réduire la diffusion de chaleur et qu'il entoure étroitement le filament (67) de manière connue en soi.

2. Lampe à incandescence selon la revendication 1, caractérisée en ce que le bulbe intermédiaire (63) présente au moins un étroit orifice (64) servant à équilibrer la pression dans les espaces contigus.

3. Lampe à incandescence selon l'une des revendications 1 ou 2, caractérisée en ce que dans au moins l'un des espaces intermédiaires entourés par un bulbe en verre, à l'extérieur de l'espace intérieur limté par le bulbe en verre de quartz (60), règne un vide élevé.

4. Lampe à incandescence selon l'une des revendications 1 à 3, caractérisée en ce qu'au moins un des espaces intermédiaires délimité par un bulbe en verre à l'extérieur de l'espace intérieur limité par le bulbe en verre de quartz (60) est rempli d'un gaz absorbant le rayonnement thermique tel que du dioxyde de carbone, de la vapeur d'eau ou un mélange de ceux-ci.

5. Lampe à incandescence selon l'une des revendications 1 à 4, caractérisée en ce que le bulbe intérieur en verre de quartz (60) est exécuté en lampe halogène et qu'il est supporté de préférence par les conducteurs d'alimentation (65, 66) du filament (67).

6. Lampe à incandescence selon l'une des revendications 1 à 5, caractérisée en ce que le filament est constitué d'au moins un filament intérieur épais et d'au moins un filament plus mince entourant le filament intérieur.

7. Lampe à incandescence selon l'une des revendications 1 à 6, caractérisée en ce que la paroi d'au moins un des bulbes, de préférence le bulbe intérieur en verre de quartz (60), est en fibres de verre.

8. Lampe à incandescence selon l'une des revendications 1 à 7, caractérisée en ce que la paroi d'au moins un des bulbes, de préférence le bulbe intérieur en verre de quartz (60), est en verre mousse et plus particulièrement en verre mousse grossier ou en verre mousse opale de finesse microscopique, et qu'il contient de préférence dans sa masse des matériaux absorbant le rayonnement infrarouge tel que du dioxyde de carbone.

9. Lampe à incandescence selon l'une des revendications 1 à 8, caractérisée en ce que le matériau de la paroi d'au moins un des bulbes, de préférence le bulbe intérieur en verre de quartz (60), est pourvu de particules réfléchissant ou absorbant le rayonnement infrarouge.

10. Lampe à incandescence selon l'une des revendications 1 à 9, caractérisée en ce que la face intérieure de la paroi du bulbe intérieur en verre de quartz présente une surface agrandie, par exemple par des rainures ou des plis.

11. Lampe à incandescence selon l'une des revendications 1 à 10, caractérisée en ce qu'elle est halogène.

12. Lampe à incandescence comprenant un bulbe en verre de quartz (40) entourant le filament (50) et présentant des orifices (51) diamétralement opposés, et un bulbe extérieur en verre (42) entourant le bulbe intérieur (40) à une certaine distance et en formant un espace, caractérisée en ce qu'elle est une lampe halogène et en ce que le bulbe intérieur en verre de quartz (40) présente une paroi plus épaisse que le bulbe extérieur en verre normal (42) pour réduire la diffusion de chaleur du filament, en ce que ce bulbe intérieur est supporté seulement par un support ou par des supports conducteurs (45, 46) du filament et en ce que les orifices diamétralement opposés (51) du bulbe intérieur sont justes assez grands pour qu'un filament introduit à travers l'un des orifices (51) soit maintenu centré par ses deux extrémités dans les deux orifices.

13. Lampe à incandescence selon la revendication 12, caractérisée en ce que le bulbe intérieur en verre de quartz (40) est de forme cylindrique ou sphérique.

Fig.1

Fig. 2